# EUROPEAN PATENT APPLICATION

(11) **EP 1 243 307 A1**
(43) Date of publication of application: **25.09.2002**
(21) Application number: 01201004.7
(22) Date of filing: 19.03.2001
(51) Int. Cl.: B01D 53/14, B01D 53/10

(54) **Process for the removal of organic micropollutants from fumes using a suitable homogeneous adsorbing suspension of a hydrophobic and lipophylic solid in aqueous solution**

(71) Applicant: SNAMPROGETTI S.p.A., 20097 San Donato Milanese (Milano) (IT)
(72) Inventor: Miglio, Roberta, 28047 Oleggio (Novara) (IT); Cozzolino, Ciro, 61032 Fano (Pesaro) (IT); Bassetti, Angelo, 61032 Fano (Pesaro) (IT)
(74) Representative: De Gregori, Antonella

(57) **Abstract**

Process for the removal of organic micropollutants from contaminated fumes using a gas/liquid contact apparatus characterized by the use of a homogeneous adsorbing suspension of a hydrophobic and lipophylic solid, consisting of synthetic or natural polymeric molecules, selected from plastics, resins, rubbers and/or silicones, in aqueous solution.

## Description

The present invention relates to a process for the removal of organic micropollutants from fumes by the use of a suitable homogeneous suspension of a hydrophobic/lipophylic solid in water.

From the vast amount of research and analyses which has been carried out in the last ten years on polychlorodi-benzo-p-dioxins (PCDD) and polychlorodibenzofurans (PCDF), the conclusion has been reached that, in principle, all process categories in which chlorine is one of the components combined with a coal source and metal oxides at temperatures higher than 180°C, are potential sources of PCDD/F. The presence of PCDD/F has been observed in the gaseous emissions of incineration plants of solid urban waste or industrial waste, and also in metallurgical plants.

PCDD/F are the most well-known representatives of the group of persistent organic micropollutants, generally known as POP ("persistent organic pollutant"), a group to which other compounds such as aromatic polycyclic hydrocarbons, polychlorobenzenes, polychloro bi- and tri-phenyls and chloronaphthenes also belong, these also being associated with PCDD/F in emissions of combustion processes.

An awareness of the effects of POP on the environment and the constant changing of legislations imposing very strict limits with respect to emissions, have led to a continuous improvement in technologies for the prevention and control of this group of compounds.

The restriction/control of the emissions of these compounds requires the use of adequate techniques for inhibiting their formation or reformation combined with suitable methods for removing them from the effluents produced.

Among organic micropollutants, PCDD/F are extremely toxic and for this reason they must be completely removed from exhaust combustion gases.

The treatment units essentially consist in removal systems by adsorption on solid materials, for example by the dry or semi-dry introduction of activated carbons or mixtures based on lime and coal followed by filtration, or in catalytic degradation systems.

The method based on adsorption is limited by the temperature which must remain sufficiently high as to avoid the condensation of acid gases and this restricts the adsorbing capacity of the material. In addition considerable quantities of adsorbing solids are necessary with the production of contaminated solid effluents, which require special treatment. Together with the organic micropollutants, other groups of pollutants are also removed in these systems, such as for example heavy volatile metals and acid gases. With respect to catalytic systems, on the other hand, complementary units must be installed, as the catalytic degradation of PCDD/F is more effective on combustion fumes from which most of the powders and acid gases have already been removed. Catalytic systems moreover, generally operating at a temperature threshold of about 200-260°C, have high running costs due to the post-heating of the gases.

The wet scrubber was originally introduced into the fume purification die in order to remove the acid gases (for example HCl, HBr, HF, SOₓ, etc.). With respect to dry or semi-dry systems which can be used for the same purpose, the wet scrubber (WS) undoubtedly offers the advantage of guaranteeing limited quantities of effluent to be treated, and essentially water which can be easily recovered after physico-chemical treatment and also has the advantage of having much better performances in the removal of acid gases than the alternative dry systems. Particular scrubber configurations are also effective in the removal of the suspended particulate.

The removal of organic micropollutants seems to be basically non-existent in the traditional WS designed for the removal of acid gases. Examples 1 and 2 of the present patent application provide the analytical result of verification tests of the performances of an industrial wet scrubber (Plate scrubber) with respect to the removal of PCDD/F. The scrubber in question, allows the removal of acid gases and volatile metals at the levels of the best technology available for these groups of pollutants and it can therefore be considered as being of very high quality, but with respect to the removal of organic micropollutants, it is substantially ineffective.

Voest Alpine (Organohalogen Compounds Vol. 40 (1999) page 441) has developed, under the name of Airfine, a spray scrubber configuration which operates with water alone without additives, particularly effective in the removal of PCDD/F associated with suspended particulate, as PCDD/F are generally found in gaseous effluents in the metallurgical industry. An essential element of the scrubber design consists in the nozzles which operate in the presence of a double water and compressed air stream, capable of producing an extremely effective water-drop dispersion in the fumes. There is no evidence that this spray scrubber is as effective when dioxins in the fumes to be purified are preferably in the gas phase, as is generally observed in fumes from incineration plants, which have already undergone a first dedusting treatment and enter a wet scrubber. Subsequent example 3 of the present patent application describes a typical division of PCDD/F between particulate phase and vapor phase measured in combustion fumes at the inlet of a wet scrubber.

At present several systems have already been developed and patented, which propose the wet removal of dioxins, but using additives in the scrubbing liquid, where the preferred additive is activated carbon.

Belco Technologies Corporation together with LAB S.A. has industrially developed a wet scrubbing technology with the use of activated carbons for the removal of dioxins; LAB S.A. also holds some patent applications on the process: WO95/15207 and WO 92/19364. These applications claim the use of finely dispersed powders, for example activated carbons (but -also oxides of Fe, Si, Al, Ti) for the wet purification of gases containing PCDD/F, which in turn contain catalytic centers for oxidation in the presence of suitable oxidants of the organic micropollutants captured. The EDV-De Diox technology however has a certain complexity as it comprises a spray scrubber for the saturation of the gas, followed by a Venturi type section for the adiabatic expansion of the fumes in order to condense the vapor on the particulate possibly present. The aerosol produced is electrically charged by passage in a section in the presence of an electrode and subsequently separated by means of electrostatic attraction.

The company Avira has patented (WO 97/49478) a process for effecting the wet removal of dioxins. In this case the activated carbon, but also Coal, coke, lime or pumice, are preferably dry injected into the fumes to be purified, before putting them in contact with the aqueous stream, at a temperature of about 250°C in a steel scrubber internally lined with rubber. The process claimed is based in particular on the idea that it is possible to obtain low and controlled emissions of dioxins only when the adsorption/desorption effect of the dioxins as a result of the apparatus used (apparatus lining), is taken into account. In the device described, the removal of micropollutants depends on the equilibrium which is established between the concentration of dioxins in the stream at the inlet, the quantity of these already adsorbed in the rubber lining of the scrubber and the residual absorption capacity of the absorbing solid introduced. It should be noted that there can be significant phenomena relating to the accumulation and memory of construction materials which, owing to the unfavorable conditions, may cause an increase in the concentration of dioxins in the fumes leaving the device rather than a removal.

The company Von Roll (Chemosphere, Vol. 25, Nr. 1-2, pages 143-148, 1992) has published the result of various removal tests of dioxins carried out in a wet scrubber of an industrial incinerator of solid urban waste, by dosing dry activated carbon before the entrance of the fumes into the wet scrubber or dosing it directly into the liquid of a circuit (Venturi or Ring Jet stage) of the wet scrubber. There is an improvement of about 50-70% in the efficiency of the PCDD/F removal compared to that with water alone. The dry removal of PCDD/F by adsorption on regenerable plastics, is described in DE-44 25 658 by S. Kreisz, H. Hunsinger.

It has been surprisingly found that the content of PCDD and PCDF in gaseous streams can be significantly reduced, if this is fed to a suitable device using a homogeneous suspension of certain adsorbing solids in an aqueous solution.

The process, object of the present invention, for the removal of organic micropollutants from contaminated fumes using a gas/liquid contact apparatus, is characterized by the use of a homogeneous adsorbing suspension of a hydrophobic and lipophylic solid, consisting of synthetic or natural polymeric molecules, selected from plastics, resins, rubbers and/or silicones, in aqueous solution:
The following plastics are preferably used:
- polyolefins, most preferably selected from polyethylene (PE), polypropylene (PP), polybutenes and polymethylpentene;
- polymers of vinyl chloride, in particular polyvinylchloride (PVC);
- aromatic polymers, most preferably selected from styrene polymers, in particular polystyrene, acrylonitrilestyrene copolymer (SAN), acrylonitrile-butandiene-styrene polymers (ABS).

Plastics are particularly preferred as they keep the particle size distribution unaltered in the application, (they do not form a fine fraction), and they can therefore be easily and completely separated and do not complicate the physico-chemical treatment of the water in which the precipitation of the suspended solids must be controlled.

These solids can be used singly or in a mixture. The selection of-the adsorbing solid can also be directed by the necessity of contemporaneously removing other micropollutants such as, for example, Hg. In this situation, a specific adsorbing agent for Hg can also be suspended in the aqueous solution, consisting for example of functionalized activated carbons (for example impregnated with molecules containing chelating organic groups of Hg) or plastics or resins with specific functional groups for Hg, selected for example from thiol, thiouronic, isothiouronic, pyrogallic, dithiocarbamate groups.

In particular, the process can essentially comprise the following steps:
- feeding of the contaminated fumes, optionally already having undergone dedusting treatment, into a gas/liquid contact apparatus;
- washing of the contaminated fumes in said apparatus using a homogeneous adsorbing suspension of a hydrophobic or lipophylic solid in an aqueous solution in a quantity ranging from 0.01 to 10% by weight, preferably from 0.1 to 5% by weight, even more preferably from 0.5 to 2.5% by weight;
- discharging of the purified fumes from said apparatus;
- flushing of an aliquot of the exhausted adsorbing suspension containing the organic micropollutants so as to maintain the removal of said micropollutants at over 90% with respect to the equivalent toxicity or to maintain a concentration of PCDD/F at the outlet at least below the limit of 0.1 ngTEQ/Nmc;
- reintegration of the homogeneous adsorbing suspension in the above apparatus.

The hydrophobic and lipophylic solids used in the homogeneous adsorbing suspensions should have a particle size ranging from 5 to 500 µm, preferably ranging from 10 to 250 µm.

The gas/liquid contact apparatus can be:
- a plate column;
- a slurry bubble column;
- a spray scrubber;
- a Venturi scrubber;
- an injector with a suitable container.

The process according to the invention should preferably be carried out so that the temperature of the homogeneous aqueous suspension in the gas/liquid contact apparatus ranges from 30 to 70°C.

An aliquot of the exhausted adsorbing suspension containing the organic micropollutants is flushed in continuous or batchwise and is subjected, when necessary, to a filtration step to separate the hydrophobic and lipophylic solid in which said organic micropollutants have been adsorbed.

The filtered liquid can be recycled to the gas/liquid contact apparatus, after reintegration of fresh hydrophobic and lipophylic solid and optionally aqueous solution.

The flushing can be limited to the concentration of other micro and macro pollutants present in the system. The exhausted adsorbing solids can be regenerated, burnt or optionally subjected to inertization or stabilization treatment; the selection of the treatment procedure depends on the contemporaneous presence of other groups of contaminants as well as the organic micropollutants.

When, for example, the adsorbing solid accumulates heavy metals in addition to organic compounds, it is preferably subjected to inertization, in other cases however it can be subjected to regeneration treatment of the thermal or chemical type known in literature.

The process, object of the present invention, can be effected using various operating procedures, both with respect to the addition of fresh adsorbing solid and for the separation of the exhausted adsorbing solid.

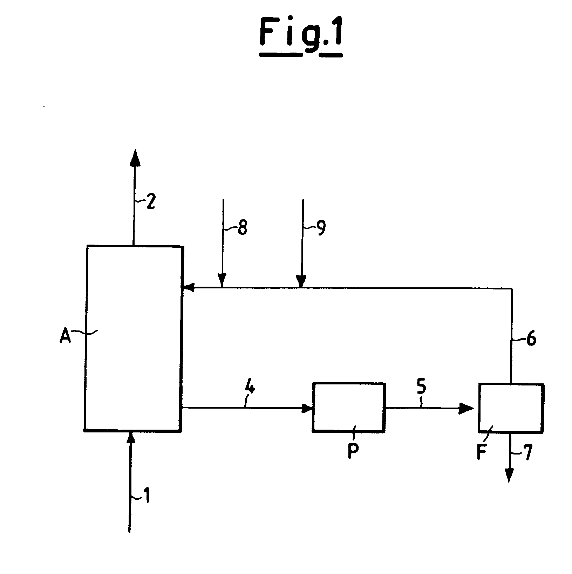

A more complete understanding of the present invention can also be obtained with the help of figure 1, which provides a schematic representation of the unitary operation which can be effected with this apparatus.

The polluted fumes (1) are fed to the washing apparatus (A) and leave it decontaminated (2).

An aliquot of the suspension (4) is removed by means of a pump (P) and is optionally sent to a filtration device (F) for the separation of the adsorbing solid (7) in which the micropollutants removed from the fumes are accumulated. The filtered liquid (6), depending on the composition of the fumes at the inlet of the washing unit (A), and consequently on the presence of other groups of contaminants, can be sent for physico-chemical treatment, or alternatively, a fresh adsorbing solid can be added (8) and dosed continuously or periodically, after reintegration (9) of the aqueous solution possibly used up in the operations described above.

Other advantages and characteristics of the present invention can be observed in the following examples, which however do not limit the scope of the invention.

### Example 1 - Comparative

Fumes with the composition indicated in detail in table I are fed to a wet scrubber having a diameter of 3 meters, a height of 25 m with a double acid and base circuit, at a flow-rate of 40,000 Nmc/h and washed in countercurrent with 60 mc/h of water in the acid circuit and 4 mc/h of water in the base circuit.

For a more detailed description of the PCDD/F, analyses of all the toxic isomers at the inlet and outlet of the scrubber are provided respectively in table II under the columns IN and OUT. The removal of the fumes is carried out using glass sampling trains and with the filter/condensation method described in regulation EN 1948-1. Table II, in addition to the concentration of each single toxic isomer of PCDD/F (ng/Nmc), also indicates the equivalent toxicity value per volume unit (ngTEQ/Nmc) which is calculated as the sum of products of the concentrations of each single isomer for the corresponding equivalent toxicity value (TEF).

The removal of PCDD/ in terms of equivalent toxicity is modest and is equal to 14%.

In the same scrubber the outgoing fumes have a residual content of HCl < 2 ppm and of SO₂ < 10 ppm, demonstrating that a scrubber, although being extremely efficient in the reduction of acid gases, is not capable of significantly removing PCDD/F.

### Example 2 - Comparative

Fumes having the composition indicated in detail in table III under the column IN are fed to a wet scrubber having a diameter of 3 meters, a height of 25 m with a double acid and base circuit, at a flow-rate of 40,000 Nmc/h and washed in countercurrent with 60 mc/h of water in the acid circuit and 4 mc/h of water in the base circuit.
The analysis of the outgoing fumes is provided in the same table under the column OUT.

It may seem surprising how the concentration of PCDD/F at the outlet (0.52 ngTEQ/Nmc) of the wet scrubber is higher than the concentration at the inlet. This behaviour can be attributed to what is called "memory effect" of the construction materials of the scrubber (in this specific case Derakane) which tend to adsorb/desorb the PCDD/F due to transients in the operating conditions in the column, generally linked to plant activation phases or to strong variations in the charge fed to the incinerator oven. This effect is difficult to foresee and extremely negative and can also lead to a failure to respect the emission limits of the plant.

### Example 3 - Comparative

Fumes, produced by SUW incineration and subjected to thermal recovery treatment and dedusting, contaminated by PCDD/F according to the analysis indicated in table IV under the column IN, are fed to a bubble column (without slurry) using a liquid ring pump situated downstream of the bubble column and sampling point of the fumes leaving the column. The prototype of the bubble column used (cylindrically shaped with a diameter of 20 cm) is completely made of glass/teflon to avoid as much as possible interference of the construction materials on the analytical measurements (glass and teflon are among materials having the lowest specific adsorption for PCDD/F). 22 Nmc/h of fumes are fed to the column at atmospheric pressure and at a temperature of 180°C by means of a perforated plate, and distributed in the overlying water volume equal to 10 liters. The temperature of the liquid is about 50°C and the total height of the liquid (water + gas phase) is 50 cm. The analysis of the outgoing fumes is provided in table IV under the column OUT.

The removal obtained, in terms of equivalent toxicity variation, is negligible (less than 4%), the variability between the two analyses is less than the analytical measurement error, and therefore the values measured demonstrate that when operating with water alone, without an adsorbing solid, there is no removal of the dioxins from the fumes under examination.

### Example 4

Fumes, produced by SUW incineration and subjected to thermal recovery treatment and dedusting, contaminated by PCDD/F according to the analysis indicated in table V under the column IN, are fed to a bubble column using a liquid ring pump situated downstream of the column and sampling point of the fumes leaving the column. The prototype of the bubble column used is cylindrical with an internal diameter of 20 cm. 16 Nmc/h of fumes are fed to the column at atmospheric pressure and at a temperature of 170°C by means of a perforated plate, and distributed in the overlying water volume equal to 12 liters, in which PVC with a particle size of 130-150 microns and in a concentration of 2.5% by weight, is suspended. The temperature of the suspension is about 50°C and the total height of the liquid (water + gas phase) is 60 cm. The analysis of the outgoing fumes is provided in table V under the column OUT.

The removal obtained, in terms of equivalent toxicity variation, is considerable. The concentration of dioxins measured in the outgoing fumes from the bubble column with plastic in suspension is about one order of magnitude less than the limit imposed by the regulation in force in Italy, equal to 0.1 ngTEQ/Nmc.

### Example 5

A process simulator was used for evaluating the performances of a double circuit (acid and base) plate column in the removal of PCDD/F, assuming the use in the upper circuit of the column itself of a homogeneous suspension of polypropylene in water (2.5% by weight).

The wet scrubber whose behaviour was simulated in this example, is characterized by the following parameters: 3 steps (2 in the base circuit), diameter of 3 m, plates of the upper circuit of the perforated type, weir height 63 mm, perforated area fraction 0.26. Both material transport phenomena and phase equilibrium were taken into account in the calculation.

40,000 Nmc/h of fumes from incineration process at a temperature of 140°C and with the following molar composition: 11.1% of water, 71.9% of nitrogen, 9.5% of oxygen and 7.5% of carbon dioxide contaminated by PCDD/F at a concentration of 0.533 ngTEQ/Nmc, were fed to the column. The scrubbing of the pollutants is carried out in the two sections of the column where the liquid streams of the two circuits are fed.

The results of the calculation indicate that the scrubbing efficiency of the PCDD/F is 1.4% in the acid section and 91.2% in the base section, the concentration at the outlet is therefore reduced to 0.048 ngTEQ/Nmc. The overall balance of the macroscopic components is indicated in table VI.

**Table I**

| **Components** | (%v) | (ng/Nmc) | (mg/Nmc) |
|---|---|---|---|
| H₂O | 10.7 | | |
| O₂ | 10.5 | | |
| N₂ | 71.1 | | |
| CO | | | 1 |
| CO₂ | 7.8 | | |
| PCDD/F | | 0.19 | |
| TEQ | | | |
| Hg | | 1 | 0.15 |
| Powders | | | 1 |
| HCl | | | 500 |
| HF | | | 1 |
| SOₓ | | | 42 |

**Table II**

| Isomers | | | IN | OUT |
|---|---|---|---|---|
| | | TEF | | |
| 2,3,7,8 TCDD | ng/Nmc | 1 | 0.023 | 0.017 |
| 1,2,3,7,8 | ng/Nmc | 0.5 | 0.048 | 0.081 |
| PeCDD | | | | |
| 1,2,3,4,7,8 | ng/Nmc | 0.1 | 0.022 | 0.032 |
| HxCDD | | | | |
| 1,2,3,6,7,8 | ng/Nmc | 0.1 | 0.031 | 0.064 |
| HxCDD | | | | |
| 1,2,3,7,8,9 | ng/Nmc | 0.1 | 0.037 | 0.029 |
| HxCDD | | | | |
| 1,2,3,4,6,7,8 | ng/Nmc | 0.01 | 0.175 | 0.229 |
| HpCDD | | | | |
| OCDD | ng/Nmc | 0.001 | 0.484 | 0.412 |
| 2,3,7,8 TCDF | ng/Nmc | 0.1 | 0.063 | 0.113 |
| 1,2,3,7,8 | ng/Nmc | 0.05 | 0.204 | 0.105 |
| PeCDF | | | | |
| 2,3,4,7,8 | ng/Nmc | 0.5 | 0.139 | 0.087 |
| PeCDF | | | | |
| 1,2,3,4,7,8 | ng/Nmc | 0.1 | 0.180 | 0.078 |
| HxCDF | | | | |
| 1,2,3,6,7,8 | ng/Nmc | 0.1 | 0.111 | 0.084 |
| HxCDF | | | | |
| 2,3,4,6,7,8 | ng/Nmc | 0.1 | 0.083 | 0.064 |
| HxCDF | | | | |
| 1,2,3,7,8,9 | ng/Nmc | 0.1 | 0.013 | 0.007 |
| HxCDF | | | | |
| 1,2,3,4,6,7,8 | ng/Nmc | 0.01 | 0.233 | 0.172 |
| HpCDF | | | | |
| 1,2,3,4,7,8,9 | ng/Nmc | 0.01 | 0.028 | 0.023 |
| HpCDF | | | | |
| OCDF | ng/Nmc | 0.001 | 0.072 | 0.060 |
| PCDD/F | nqTEQ/Nmc | | 0.187 | 0.160 |
| wherein TEF = equivalent toxicity factor | | | | |

**Table III**

| Isomers | | | IN | OUT |
|---|---|---|---|---|
| | | TEF | | |
| 2,3,7,8 TCDD | ng/Nmc | 1 | 0.018 | 0.016 |
| 1,2,3,7,8 PeCDD | ng/Nmc | 0.5 | 0.040 | 0.051 |
| 1,2,3,4,7,8 HxCDD | ng/Nmc | 0.1 | 0.032 | 0.068 |
| 1,2,3,6,7,8 HxCDD | ng/Nmc | 0.1 | 0.079 | 0.216 |
| 1,2,3,7,8,9 HxCDD | ng/Nmc | 0.1 | 0.090 | 0.202 |
| 1,2,3,4,6,7,8 | ng/Nmc | 0.01 | 0.599 | 1.351 |
| HpCDD | | | | |
| OCDD | ng/Nmc | 0.001 | 1.777 | 2.168 |
| 2,3,7,8 TCDF | ng/Nmc | 0.1 | 0.083 | 0.085 |
| 1,2,3,7,8 PeCDF | ng/Nmc | 0.05 | 0.288 | 0.321 |
| 2,3,4,7,8 PeCDF | ng/Nmc | 0.5 | 0.322 | 0.444 |
| 1,2,3,4,7,8 HxCDF | ng/Nmc | 0.1 | 0.364 | 0.604 |
| 1,2,3,6,7,8 HxCDF | ng/Nmc | 0.1 | 0.222 | 0.385 |
| 2,3,4,6,7,8 HxCDF | ng/Nmc | 0.1 | 0.230 | 0.497 |
| 1,2,3,7,8,9 HxCDF | ng/Nmc | 0.1 | 0.016 | 0.030 |
| 1,2,3,4,6,7,8 | ng/Nmc | 0.01 | 0.841 | 1.650 |
| HpCDF | | | | |
| 1,2,3,4,7,8,9 | ng/Nmc | 0.01 | 0.088 | 0.193 |
| HpCDF | | | | |
| OCDF | ng/Nmc | 0.001 | 0.459 | 0.576 |
| PCDD/F | ngTEQ/Nmc | | 0.34 | 0.52 |

**Table IV**

| Isomers | | | IN | OUT |
|---|---|---|---|---|
| | | TEF | | |
| 2,3,7,8 TCDD | ng/Nmc | 1 | 0.016 | 0.015 |
| 1,2,3,7,8 PeCDD | ng/Nmc | 0.5 | 0.030 | 0.027 |
| 1,2,3,4,7,8 HxCDD | ng/Nmc | 0.1 | 0.005 | 0.005 |
| 1,2,3,6,7,8 HxCDD | ng/Nmc | 0.1 | 0.016 | 0.008 |
| 1,2,3,7,8,9 HxCDD | ng/Nmc | 0.1 | 0.009 | 0.005 |
| 1,2,3,4,6,7,8 | ng/Nmc | 0.01 | 0.014 | 0.003 |
| HpCDD | | | | |
| OCDD | ng/Nmc | 0.001 | 0.001 | 0.0004 |
| 2,3,7,8 TCDF | ng/Nmc | 0.1 | 0.027 | 0.027 |
| 1,2,3,7,8 PeCDF | ng/Nmc | 0.05 | 0.008 | 0.010 |
| 2,3,4,7,8 PeCDF | ng/Nmc | 0.5 | 0.115 | 0.108 |
| 1,2,3,4,7,8 HxCDF | ng/Nmc | 0.1 | 0.023 | 0.042 |
| 1,2,3,6,7,8 HxCDF | ng/Nmc | 0.1 | 0.015 | 0.024 |
| 2,3,4,6,7,8 HxCDF | ng/Nmc | 0.1 | 0.017 | 0.018 |
| 1,2,3,7,8,9 HxCDF | ng/Nmc | 0.1 | 0.001 | 0.0037 |
| 1,2,3,4,6,7,8 | ng/Nmc | 0.01 | 0.005 | 0.0038 |
| HpCDF | | | | |
| 1,2,3,4,7,8,9 | ng/Nmc | 0.01 | 0.001 | 0.0008 |
| HpCDF | | | | |
| OCDF | ng/Nmc | 0.001 | 0.0003 | 0.0002 |
| PCDD/F | ngTEQ/Nmc | | 0.310 | 0.306 |

**Table V**

| Isomers | | | IN | OUT |
|---|---|---|---|---|
| | | TEF | | |
| 2,3,7,8 TCDD | ng/Nmc | 1 | 0.019 | 0.002 |
| 1,2,3,7,8 PeCDD | ng/Nmc | 0.5 | 0.060 | 0.002 |
| 1,2,3,4,7,8 HxCDD | ng/Nmc | 0.1 | 0.039 | 0.004 |
| 1,2,3,6,7,8 HxCDD | ng/Nmc | 0.1 | 0.082 | 0.005 |
| 1,2,3,7,8,9 HxCDD | ng/Nmc | 0.1 | 0.051 | 0.004 |
| 1,2,3,4,6,7,8 | ng/Nmc | 0.01 | 0.498 | 0.011 |
| HpCDD | | | | |
| OCDD | ng/Nmc | 0.001 | 1.639 | 0.016 |
| 2,3,7,8 TCDF | ng/Nmc | 0.1 | 0.660 | 0.002 |
| 1,2,3,7,8 PeCDF | ng/Nmc | 0.05 | 0.207 | 0.003 |
| 2,3,4,7,8 PeCDF | ng/Nmc | 0.5 | 0.242 | 0.007 |
| 1,2,3,4,7,8 HxCDF | ng/Nmc | 0.1 | 0.859 | 0.005 |
| 1,2,3,6,7,8 HxCDF | ng/Nmc | 0.1 | 0.347 | 0.006 |
| 2,3,4,6,7,8 HxCDF | ng/Nmc | 0.1 | 0.463 | 0.006 |
| 1,2,3,7,8,9 HxCDF | ng/Nmc | 0.1 | 0.030 | 0.003 |
| 1,2,3,4,6,7,8 | ng/Nmc | 0.01 | 1.961 | 0.020 |
| HpCDF | | | | |
| 1,2,3,4,7,8,9 | ng/Nmc | 0.01 | 0.481 | 0.004 |
| HpCDF | | | | |
| OCDF | ng/Nmc | 0.001 | 4.445 | 0.004 |
| PCDD/F | ngTEQ/Nmc | | 0.469 | 0.012 |

**Table VI**

| | Fumes In | Fumes Out | Acid flushing | Acid make up | Base flushing | Base make up |
|---|---|---|---|---|---|---|
| | | | | | | |
| Temperature | 140.0 | 40.0 | 59.2 | 60.0 | 40.0 | 40.0 |
| | | | | | | |
| Vol.flow rate vapor phase (Nm³/h) | 40000 | 38401 | | | | |
| Vol.flow rate liquid phase (m³/h) | | | 2.0 | 5.3 | 5.3 | 0.8 |
| | | | | | | |
| Maximum flow rate (kg/h) | | | | | | |
| H₂O | 3554 | 2276 | 2018 | 5264 | 5323 | 799 |
| N₂ | 35924 | 35919 | 1 | | 4 | |
| O₂ | 5452 | 5451 | | | 1 | |
| CO₂ | 5920 | 5913 | 1 | | 6 | |
| | | | | | | |
| Total | 50851 | 49559 | 2021 | 5264 | 5334 | 799 |

## Claims

1. A process for the removal of organic micropollutants from contaminated fumes using a gas/liquid contact apparatus **characterized by** the use of a homogeneous adsorbing suspension of a hydrophobic and lipophylic solid, consisting of synthetic or natural polymeric molecules, in aqueous solution.

2. The process according to claim 1, wherein the polymeric molecules are selected from plastics, resins, rubbers and/or silicones.

3. The process according to claim 2, wherein the plastics used are polyolefins, vinyl chloride polymers and styrene polymers.

4. The process according to claim 3, wherein the polyolefins are selected from polyethylene (PE), polypropylene (PP) and polybutenes.

5. The process according to claim 3, wherein the vinyl chloride polymer is polyvinylchloride (PVC).

6. The process according to claim 3, wherein the styrene polymers are selected from polystyrene, acrylonitrilestyrene (SAN) polymer, acrylonitrile-butadiene-styrene (ABS) polymers.

7. The process according to at least one of the claims from 1 to 6, **characterized in that** it essentially comprises the following steps:
- feeding of the contaminated fumes, optionally already having undergone dedusting treatment, into a gas/liquid contact apparatus;
- washing of the contaminated fumes in said apparatus using a homogeneous adsorbing suspension of a hydrophobic or lipophylic solid, selected from plastics, resins and/or rubbers, in an aqueous solution in a quantity ranging from 0.01 to 10% by weight;
- discharging of the purified fumes from said apparatus;
- flushing of an aliquot of the exhausted adsorbing suspension containing the organic micropollutants so as to maintain the removal of said micropollutants at over 90% with respect to the equivalent toxicity or to maintain a concentration of PCDD/F at the outlet at least below the limit of 0.1 ngTEQ/Nmc;
- reintegration of the homogeneous adsorbing suspension in the above apparatus.

8. The process according to claim 7, wherein the hydrophobic and lipophylic solid in the homogeneous aqueous suspension is in a quantity ranging from 0.1 to 5% by weight.

9. The process according to claim 8, wherein the hydrophobic and lipophylic solid in the homogeneous aqueous suspension is in a quantity ranging from 0.5 to 2.5% by weight.

10. The process according to claim 7, wherein the hydrophobic and lipophylic solid in the homogeneous aqueous suspension has a particle size ranging from 5 to 500 µm.

11. The process according to claim 10, wherein the hydrophobic and lipophylic solid in the homogeneous aqueous suspension has a particle size ranging from 10 to 250 µm.

12. The process according to claim 7, wherein the temperature of the homogeneous aqueous suspension in the gas/liquid contact apparatus ranges from 30 to 70°C.

13. The process according to claim 1, wherein the gas/liquid contact apparatus is a plate column.

14. The process according to claim 1, wherein the gas/liquid contact apparatus is a slurry bubble column.

15. The process according to claim 1, wherein the gas/liquid contact apparatus is a spray scrubber.

16. The process according to claim 1, wherein the gas/liquid contact apparatus is a Venturi scrubber.

17. The process according to claim 7, wherein the aliquot of suspension containing the organic micropollutants is sent to a filtration step for the separation of the hydrophobic and lipophylic solid, in which the organic micropollutants have been adsorbed.

18. The process according to claim 17, wherein the aliquot of suspension, after being filtered, separating it from the hydrophobic and lipophylic solid, is recycled to the bubble column after reintegration of fresh hydrophobic and lipophylic solid and optionally aqueous solution.

19. The process according to claim 7, wherein the flushing of the aliquot of suspension is carried out in continuous.

20. The process according to claim 7, wherein the flushing of the aliquot of suspension is carried out batchwise.

21. The process according to at least one of the claims from 1 to 20, wherein dioxins are present among the organic micropollutants.
